(19)

**Europäisches Patentamt**

**European Patent Office**

**Office européen des brevets**

(11) **EP 2 451 049 A1**

(12) **EUROPÄISCHE PATENTANMELDUNG**

(43) Veröffentlichungstag:
**09.05.2012 Patentblatt 2012/19**

(21) Anmeldenummer: **10189891.4**

(22) Anmeldetag: **03.11.2010**

(51) Int Cl.:
*H02K 1/27* (2006.01)          *H02K 16/02* (2006.01)
*H02K 29/03* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Brusa Elektronik AG**
**9466 Sennwald (CH)**

(72) Erfinder: **Mathoy, Arno**
**9472 Grabs (CH)**

(74) Vertreter: **Patentbüro Paul Rosenich AG**
**BGZ**
**9497 Triesenberg (LI)**

(54) **Rotor mit Blechpaket für eine Elektromaschine, insbesondere für eine Synchronmaschine**

(57)   Die Erfindung betrifft einen Rotor (3) mit einem Rotorblechpaket (4) für eine Synchronmaschine (1). Das Rotorblechpaket (4) ist auf einer Rotorwelle (5) drehfest verdrehstarr befestigt und besteht aus einzelnen Blechen (9). Jedes der Bleche (9) weist eine Rotationsachse (8) und Orientieröffnungen (11), insbesondere zur Aufnahme von Blech-Orientierelementen (10), auf. Das Wesen der Erfindung liegt darin, dass - wie an sich bekannt und zur Verminderung von Rastmomenten der Elektromaschine (1) das Rotorblechpaket (4) aus mindestens zwei Rotorteilpaketen ($13_1$-$13_6$) besteht, wobei jedes Rotorteilpaket (13) mindestens zwei Bleche (9) mit den im zusammengebauten Zustand des Rotorblechpakets (4) koaxial angeordneten Orientieröffnungen ($11_1$-$11_n$) aufweist. Die Orientieröffnungen ($11_1$-$11_n$) der benachbarten Rotorteilpakete ($13_1$-$13_n$) sind im Rotorblechpaket (4) zueinander winkelversetzt bzw. verdreht ausgebildet, so dass im zusammengebauten Zustand bei fluchtenden Orientieröffnungen ($11_1$-$11_n$) die Pole benachbarter Rotorteilpakete um die Rotationsachse (8) relativ zueinander verdreht sind.

Fig.4

EP 2 451 049 A1

**Beschreibung**

GEBIET DER ERFINDUNG

Die vorliegende Erfindung betrifft einen Rotor mit einem oder mehreren Blechpaketen für eine Elektromaschine, insbesondere Synchronmaschine (abgekürzt: SM, gegebenenfalls auch für Hybrid- Synchronmaschinen abgekürzt: HSM), wobei das Blechpaket aus einzelnen Blechen besteht und jedes der Bleche mit Orientieröffnungen zur Aufnahme von Blech-Orientierelementen versehen ist, nach dem Oberbegriff des Anspruches 1.

STAND DER TECHNIK

Wie bekannt, werden Blechpakete für einen Elektromotorrotor aus Blechen hergestellt. Die einzelnen Bleche werden meistens aus Metallblech durch Stanzen hergestellt und dann z.B. auf Orientierstangen (reine Montagehilfe) nacheinander aufgereiht, paketiert und danach befestigt, z.B. durch Anbringen von Schweissnähten parallel zur Rotorachse an deren Umfang. Sie bilden dann ein komplettes Blechpaket. Dazu werden Orientieröffnungen z.B. Bohrungen oder Nuten in jedem Blech gefertigt, durch die die Orientierelemente in Form von Stangen oder Bolzen gesteckt werden können, um die Bleche zu einem Blechpaket zusammenzuführen und sie bis zur Endfixation in richtiger Position zueinander zu halten.

Aus der WO-01/69759 A2 ist eine solche Blechpaketgeometrie für einen Rotor bekannt, bei welcher mindestens ein, sich zwischen Rotorpolen in eine Pollücke erstreckender Vorsprung des Blechs mit einem Aufreihloch (Orientieröffnung) versehen ist. Alle Bleche und ihre axialen Aufreihlöcher sind im Blechpaket in gleicher Winkellage entlang ihres Teilkreises um die Rotorwelle angeordnet.

Diese zusätzlichen Vorsprünge erhöhen aber unvermeidlich die Kosten des Blechpakets abgesehen davon haben diese Vorsprünge noch folgenden Nachteil: sie erhöhen das Blechgewicht in einem Bereich, in dem das Blech nichts zur elektrischen Leistung des Motors beiträgt. Ganz abgesehen davon bietet dieser Aufbau auch keine Reduktion der Rastmomente.

Gerade diese Rastmomente bekannter Motoren sind jedoch unannehmbar hoch, wodurch die Verbreitung von SMen als Antriebsmotoren von Elektromobilen - ohne eine entsprechende Reduzierung dieses Rastmomentes, begrenzen werden könnte.

WESEN DER ERFINDUNG

Der Erfindung liegt die Aufgabe zugrunde, einen verbesserten Rotor für einen Elektromotor, insbesondere Synchronmotor zu schaffen, durch welchen die oben erwähnten Nachteile des Standes der Technik reduziert bzw. eliminiert werden kann, d.h. durch welchen die Rastmomente des Elektromotors, insbesondere SM bedeutend vermindert werden und gleichzeitig die Herstellung vor allem für grosse Stückzahlen optimiert werden kann.

Die gestellte Aufgabe wird durch die Merkmale des unabhängigen Anspruchs 1 gelöst.

Insbesondere geht es dabei darum, dass erfindungsgemäss verschiedene Gruppen von Blechen pro Rotor zur Verfügung gestellt werden, wobei innerhalb jeder Gruppe (Rotorteilpaket) identische Bleche zur Anwendung kommen, benachbarte Gruppen (Rotorteilpakete) jedoch unterschiedliche Bleche aufweisen. Der Unterschied besteht darin, dass die Orientieröffnungen entlang des Teilkreises - um jeweils einen identischen Wert versetzt angeordnet sind.

Vorteilhafte Weiterentwicklungen der erfindungsgemäßen Lösung sind in den abhängigen Ansprüchen angegeben.

Die erfindungsgemäße Weiterentwicklung ging also von dem oben erörterten Stand der Technik, d.h. aus einem Rotor mit einem Rotorblechpaket aus, wobei das Rotorblechpaket auf einer Rotorwelle mitdrehbar befestigt ist und aus einzelnen Blechen besteht. Jedes der Bleche weist eine Rotationsachse und Orientieröffnungen insbesondere zur Aufnahme von Blech-Orientierelementen auf.

Das Wesen der Erfindung wird darin gesehen, dass das Rotorblechpaket - insbesondere zur Verminderung von Rastmomenten der Elektromaschine - aus mindestens zwei Rotorteilpaketen besteht, wobei jedes Rotorteilpaket aus mindestens zwei Blechen mit - im zusammengebautem Zustand des Rotorblechpakets - koaxial angeordneten Orientieröffnungen besteht. Diese Orientieröffnungen der Bleche sind - im unmontierten Zustand - in den benachbarten Rotorteilpaketen zueinander versetzt oder verdreht ausgebildet. Damit ergibt sich im montierten Zustand ein Winkelversatz zwischen den magnetischen Polen benachbarter Teilpakete.

Mit anderen symbolischen Worten, betrachtet man ein Blech bzw. ein Rotorteilpaket mit seinem Teilkreis als Uhr mit einem Ziffernblatt, und mehreren Zeigern, wobei die Orientieröffnungen die Zeiger auf der Uhr darstellen, dann sind alle Zeiger bei einer Gruppe (Rotorteilblechpaket) in einer zueinander konstanten (der Winkelabstand zwischen den Zeigern einer Uhr ist identisch mit dem Winkelabstand zwischen den Zeigern der anderen Uhr) jedoch unterschiedlichen Stellung gegenüber den benachbarten Uhren (Rotorteilpaketen). Die Ziffernblätter aller Uhren sind jedoch identisch. Bringt man nun alle Zeiger von allen Uhren in fluchtende Übereinstimmung, so verdrehen sich dementsprechend die Ziffernblätter jeweils um den definierten Winkelversatz.

Somit können auf einfache Art und Weise unterschiedliche Relativlagen der Rotorteilpakete zueinander geschaffen werden, indem die Orientieröffnungen in fluchtende Übereinstimmung gebracht werden.

Bei einem bevorzugten Ausführungsbeispiel der Erfindung sind die Orientieröffnungen der benachbarten Rotorteilpakete von einer Mittellinie in den Pollükken (q-Achse) um die Rotationsachse des Rotorblechpakets um einen Winkel von vorzugsweise -3,0° bis +3,0° zueinander verdreht ausgebildet - sprich zwei benachbarte um 1,0° verdreht.

Die fluchtend oder versetzt liegenden Orientieröffnungen der benachbarten Rotorteilpakete sind im zusammengebautem Zustand des Rotorblechpakets fluchtend zur Aufnahme von Orientierelementen angeordnet. Mit Ausnahme der Orientieröffnungen sind die Bleche mit ihren tangentialen Magnetfächern von radialsymmetrischer Gestalt.

Nach einem weiteren Merkmal einer Weiterentwicklung der Erfindung bilden die Magnetfächer für die Permanentmagnete der benachbarten Rotorteilpakete des Rotorblechpakets eine treppenförmige Ausrichtung.

Im zusammengebauten Zustand des Rotorblechpakets sind - durch die versetzt ausgebildeten Orientieröffnungen der benachbarten Rotorteilpakete - die tangentialen Magnetfächer der Rotorteilpakete mit ihren vergrabenen Permanentmagneten - gemäss einer besonderen Ausgestaltung der Erfindung - auch in axialer Richtung des Rotors symmetrisch im Rotorblechpaket angeordnet. Dadurch können sich die Belastungen im Motors noch gleichmäßiger verteilen.

KURZE BESCHREIBUNG DER ZEICHNUNGEN

Die Erfindung wird eingehender anhand der beiliegenden Zeichnungen nachstehend erläutert, welche einige Ausführungsbeispiele der erfindungsgemäßen Lösung illustrieren. Es zeigt:

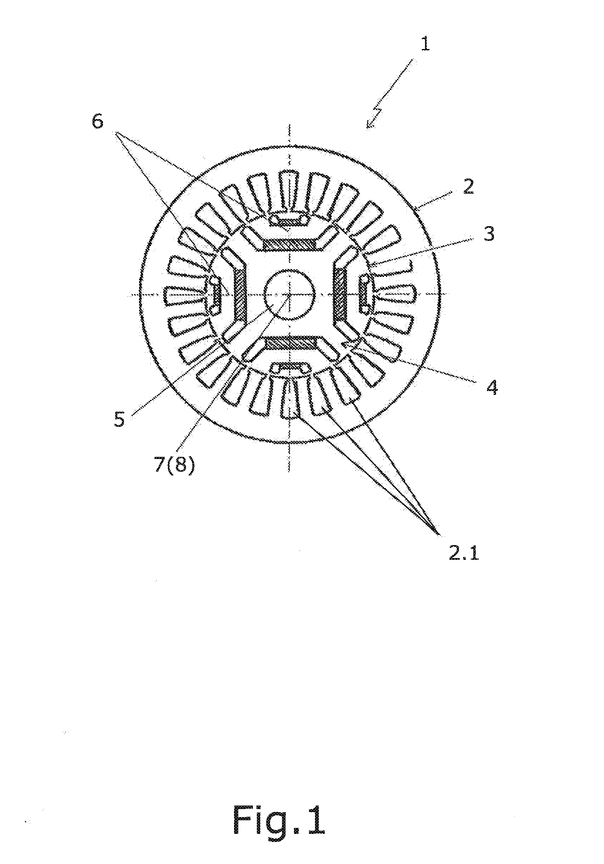

■ Fig.1 eine schematische Schnittansicht eines Hybrid-Synchron-Motors mit einem Ausführungsbeispiel des erfindungsgemäßen Rotors;

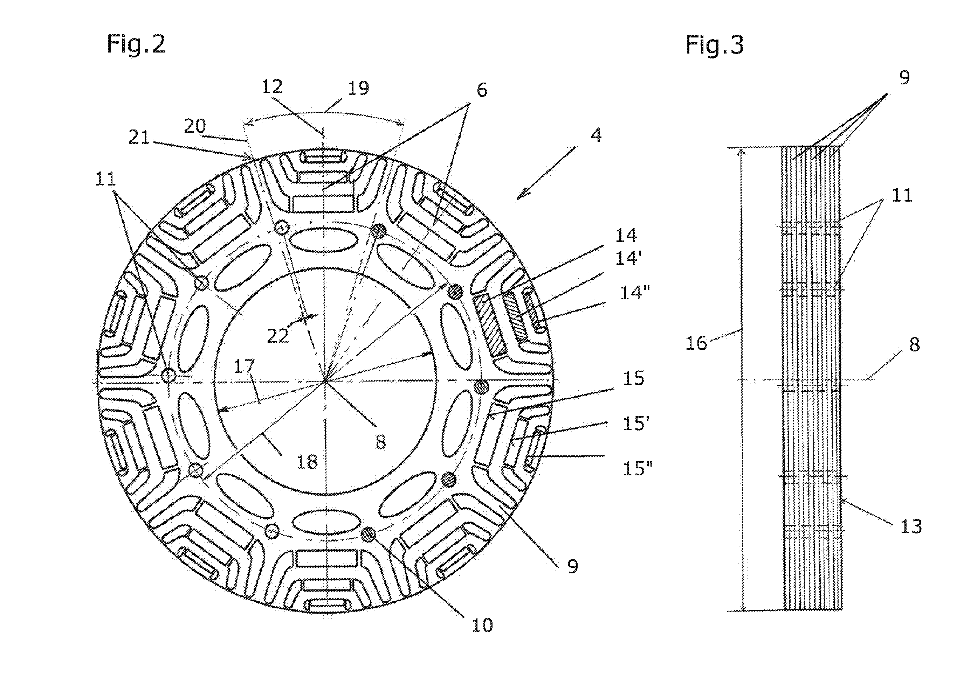

■ Fig.2 eine Stirnansicht einer ersten Variante des erfindungsgemäßen Rotorblechpakets nach Fig.1, im vergrößerten Maßstab;

■ Fig.3 eine Seitenansicht eines Teiles des Rotorblechpakets nach Fig.2;

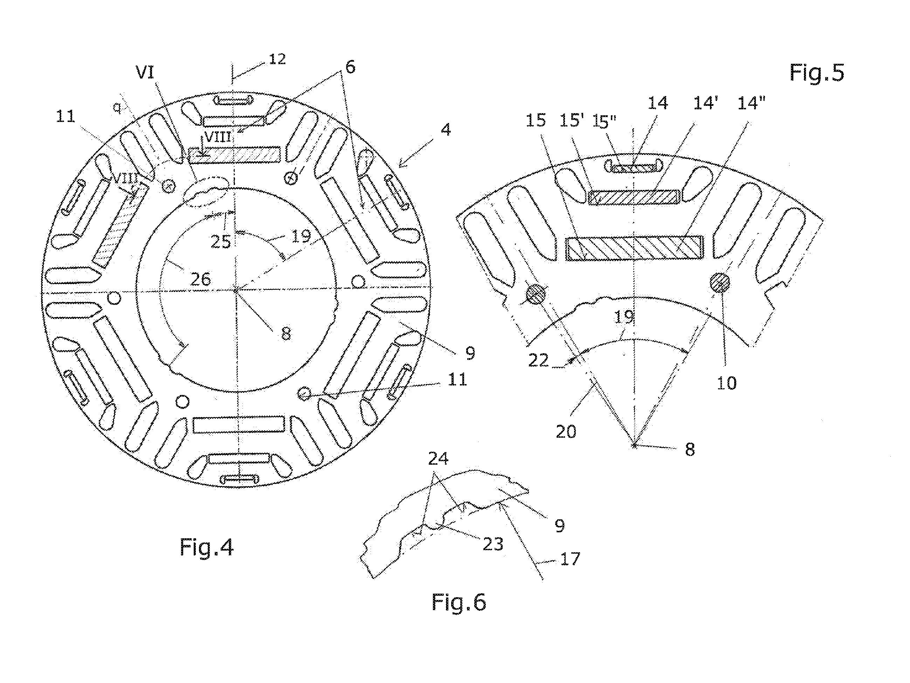

■ Fig.4 eine Stirnansicht einer zweiten Variante des erfindungsgemäßen Rotorblechpakets nach Fig.1, im vergrößerten Maßstab;

■ Fig.5 eine Teilansicht der Lösung nach Fig.4 im vergrößerten Maßstab;

■ Fig.6 eine vergrößerte Ansicht eines Teiles VI in Fig.4, im vergrößerten Maßstab;

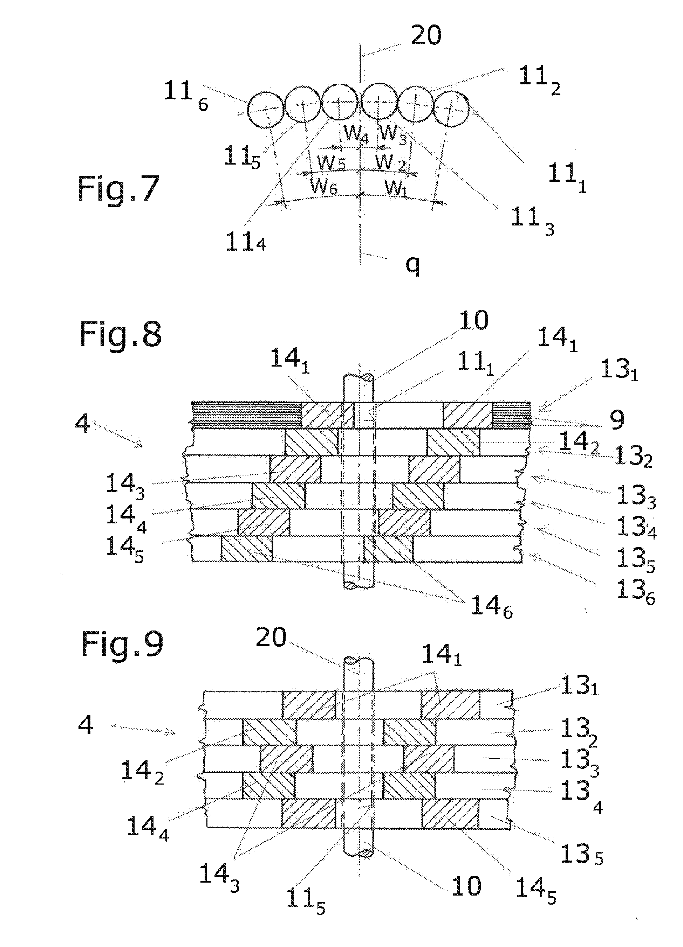

■ Fig.7 eine schematische Ansicht des Versatzes der Orientieröffnungen relativ zur q-Achse in Fig.4, bei Herstellung der Bleche;

■ Fig.8 ein Schnitt entlang VIII-VIII in Fig.4;

■ Fig.9 eine bevorzugte Variante des Schnittes in Fig.5 mit fünf Rotorteilpaketen.

BESCHREIBUNG VON AUSFÜHRUNGSBEISPIELEN DER ERFINDUNG

Gleiche oder ähnliche Merkmale sind in den Figuren, in der nachstehenden Beschreibung und in den Patentansprüchen mit den gleichen Bezugszeichen (ggf. mit je einem Index) bezeichnet.

Fig.1 zeigt schematisch eine Schnittansicht einer Elektromaschine, insbesondere eine Synchronmaschine (SM bzw. HSM) 1, welche einen Stator 2 und einen erfindungsgemäßen Rotor 3 aufweist. Der Stator 2 ist mit radialen Statornuten 2.1 versehen. Der Rotor 3 ist mit einem Rotorblechpaket 4 versehen, welches auf einer Rotorwelle 5 mitdrehbar befestigt ist. Aufgrund mangelnder Details, sieht die Skizze von Fig. 1 wie ein herkömmlicher HSM-Motor aus.

Der Rotor 3 hat beim ersten Ausführungsbeispiel nach Fig.1 vier Rotorpole 6. Eine Drehachse 7 der Rotorwelle 5 bildet gleichzeitig auch eine Rotationsachse 8 für das Rotorblechpaket 4. Dieser HSM 1 kann z.B. mit Vorzug als Hauptantriebsmotor von Elektromobilen verwendet werden.

Die Einzelheiten des erfindungsgemäßen Rotors 3 - insbesondere seine Mittel zur Orientierung der Bleche untereinander - und das Rotorblechpaket 4 werden anhand der nachfolgenden Figuren 2-9 näher dargelegt.

Beim zweiten Ausführungsbeispiel des erfindungsgemäßen Rotorblechpakets 4 (siehe Figuren 2-3) hat der Rotor 3 zehn Rotorpole 6. Das Rotorblechpaket 4 ist grundsätzlich aus Blechen 9 hergestellt. Die einzelnen Bleche 9 werden in an sich bekannter Weise aus Stahlblech (Dynamoblech)oder aus anderen geeigneten Materialien, wie insbesondere aus Kobalt oder aus einer Kobaltlegierung z.B. durch Stanzen oder Laser- oder Wasserstrahlschneiden o.dgl. hergestellt, und dann vorzugsweise auf Orientierelemente 10, vorzugsweise Orientierschraubbolzen nacheinander aufgereiht und paketiert; so bilden die Bleche 9 zusammen zunächst Rotorteilpakete 13 und mehrere Rotorteilpakete 13 zusammen das komplette Rotorblechpaket 4. Am Ende der Rotormontage können diese Orientierschraubbolzen verschraubt und dadurch die Blechpakete 13,4 auch zusammengespannt werden

Zur Aufnahme der Orientierelemente 10 werden Orientieröffnungen 11, in diesem Falle runde Aussparungen (ähnlich einer Bohrung oder eine Bohrung), in jedem Blech 9 vorgesehen, durch welche die Orientierelemente 10 hindurch gesteckt werden können, um die Bleche 9 zu einem Rotorblechpaket 13,4 zusammenzuhalten. Gemäss Fig.2 werden zehn Orientieröffnungen 11 bei diesem Ausführungsbeispiel verwendet, die symmetrisch um die Rotationsachse 8 des Rotorblechpakets 4 verteilt sind. Eine Polachse (so genannte "d-Achse" des Rotorpoles 6) ist in Fig.2 mit 12 bezeichnet.

Im Sinne der Erfindung besteht das Rotorblechpaket 4 aus mindestens zwei - vorzugsweise mindestens 5, in Fig.2 dargestelltem Falle aus sechs Rotorteilpaketen 13 zu je mindestens zwei, ggf. je nach Blechdicke 50-80 Stücke von einzelnen Blechen 9, die alle pro Rotorteilpaket die gleiche Anordnung der Orientieröffnungen 11 haben. Jedes aus den Blechen 9 zusammengestellte Rotorteilpaket 13 (Fig.3) ist vorzugsweise mit tangentialen Magnetfächer 15, 15', 15" mit je einem vergrabenen Permanentmagnet 14, 14', 14" versehen.

Die benachbarten Rotorteilpakete 13 im Rotorblechpaket 4 sind jedoch erfindungsgemäß zueinander relativ versetzt bzw. verdreht angeordnet, wozu die unterschiedlich positionierten Orientieröffnungen 11 der verschiedenen Rotorteilpakete 13 für die axialen Orientierelemente 10 vorgesehen sind.

Durch die zueinander verdrehte bzw. in Bezug auf die Statorpole und in Bezug aufeinander versetzte Anordnung der Rotorteilpakete 13 im Rotorblechpaket 4 werden scheinbar schräg verlaufende stufenförmige Magnetfächer 15, 15', 15" geschaffen, in denen die zugehörigen Permanentmagnete 14, 14', 14" (siehe auch Fig. 8)sitzen. Demzufolge wirken die Permanentmagnete nicht gleichzeitig sondern zeitlich versetzt nacheinander mit den Statorpolen. Daher sind die Rastmomente reduziert bzw. "verschmiert".

Jedes der sechs Rotorteilpakete 13 hat also die eigenen Orientieröffnungen 11, die also zu den Orientieröffnungen 11 des benachbarten Rotorteilpakets 13 versetzt bzw. verdreht sind. Somit besteht das Rotorblechpaket 4 des Rotors 3 in den beigelegten Figuren aus den sechs Rotorteilpaketen 13, d.h. sechs "Stufen" von den Magnetfächer 15, 15', 15". Jede Stufe bzw. jedes Rotorteilpaket 13 ist aber in sich komplett mit zugehörigen vergrabenen Permanentmagneten 14, 14' 14" ausgerüstet, wie es teilweise in Fig.2 sichtbar ist. Für die übereinander liegenden Orientieröffnungen 11 der zueinander verdrehten Rotorteilpakete 13 wird jeweils eines der gemeinsamen Orientierelemente 10 verwendet, d.h. im zusammengebauten Zustand des Rotorblechpakets 4 fluchten alle Orientieröffnungen und sind somit koaxial angeordnet.

Fig.3 zeigt eines von den sechs Rotorteilpaketen 13 des Rotorblechpakets 4 des Rotors 3 in Seitenansicht, welches aus den erfindungsgemäßen Blechen 9 nach Fig.2 paketiert, d.h. zusammengestellt ist. Es ist ersichtlich, dass die Orientieröffnungen 11 binnen des illustrierten Rotorteilpakets 13 koaxial zur Aufnahme des Orientierelements 10 angeordnet sind.

Was die Verteilung und die Anzahl der Orientieröffnungen 11 in jedem Blech 9 z.B. um die Rotationsachse 8 (bzw. um die koaxiale Drehachse 7 des Rotors 4) anbelangt, wird nachstehend näher erläutert.

Bei der Verwendung von zehn Rotorpolen 6 wurden beim Ausführungsbeispiel nach Fig.2 zehn Orientieröffnungen 11 verwendet, die symmetrisch um die Rotationsachse 8 des Rotorblechpakets 4 verteilt sind. Es könnte aber ggf. eine Anzahl von mindestens zwei oder drei oder auch fünf Orientieröffnungen 11 sinnvoll sein. Bei der Anwendung von zwei Orientieröffnungen 11 sind diese um die Rotorachse symmetrisch gegenüberliegend anzuordnen.

In Fig.2 werden auch ein äußerer Durchmesser 16 und ein innerer Durchmesser 17 des Rotorblechpakets 4, ein Teilkreis 18 der Orientieröffnungen 11, sowie ein erster Winkel 19 von 36° des Rotorpoles 6 - gemessen zwischen Mittellinien 20 von zwei benachbarten Pollücken 21 (oder auch "q-Achse")- bezeichnet.

Es ist aber eine spezielle Maßnahme, dass die Orientieröffnungen 11 der benachbarten Rotorteilpakete 13 in der Ausführung nach Fig.2 um die Rotationsachse 8 des Blechs 9 mit einem Winkel 22 von der Mittellinie 20 (q-Achse) z.B. nach rechts winkelversetzt bzw. verdreht ausgebildet sind.

Es ist eine solche Ausführung denkbar, bei der die dargestellten Bohrungen 11 - mindestens teilweise - tatsächlich nicht zum Zusammenbau der Rotorteilpakete 13 zu einem Rotorblechpaket 4, sondern lediglich als Montagehilfe für die Bleche 9 dienen, bevor sie miteinander verbunden, z.B. verschweißt oder verklebt werden und/oder bevor die Permanentmagnete 14 in die Magnetfächer 15 eingeschoben sind.

In den Figuren 4-6 ist ein bevorzugtes drittes Ausführungsbeispiel des Rotorblechpakets 4 des erfindungsgemäßen Rotors 3 zu sehen. Der Unterschied zur Anordnung nach Fig.2 liegt im Wesentlichen darin, dass es sich hier um eine 6-polige Anordnung handelt. Dementsprechend sind hier vorzugsweise sechs Orientieröffnungen 11 für das Orientierelement 10 verwendet, die von der Mitte-Ilinien 20 der Pollücken 21 (q-Achse) um die Rotationsachse 8 der Bleche 9 mit einem Winkel 22 verdreht ausgebildet sind (siehe Fig.5). Der erste Winkel 19 zwischen den benachbarten Mittellinien 20 der Pollücken 21 beträgt bei dieser Ausführungsform 60°.

Nachstehend wird näher erläutert, um wie viel Grad die Bohrungen 11 zwischen den Rotorteilpaketen 13 nach der Erfindung zueinander versetzt werden sollen. Es ist im Sinne der Erfindung nach einem Beispiel folgenderweise bestimmt:

■ Zuerst soll dazu die Anzahl der Rotorteilpakete (TP) des Rotors (R) bestimmt werden. Bei den dargestellten Fällen: TP = 6;

■ Die Anzahl der Statornuten (SN), bei der 6-poligen Standardmaschine nach Fig.4: SN = 54 (bei einer 10-poligen HSM nach Fig.2: SN = 60);

■ Der relative Winkelversatz (ΔW) zwischen den jeweils benachbarten Rotorteilpaketen 13 (TP) kann dann aus der folgenden Gleichung berechnet werden: ΔW = 360°/(SN x TP);

■ Aus dieser Gleichung ergibt sich der relative Win-

kelversatz ($\Delta W$) für die Ausführung (nach Fig.4-6):

$$\Delta W = 360°/(SN \times TP) = 360°/(54 \times 6) = 1,11°.$$

■ Bei der 10-poligen HSM (nach Fig.en 2-3):

$$\Delta W = 360°/(SN \times TP) = 360°/(60 \times 6) = 1,0°.$$

Was die vorgeschlagene relativ versetzte Verteilung der Orientieröffnungen 11 in den benachbarten Rotorteilpaketen 13, d.h. die Lage der Bohrungen 11 in Bezug auf die Mittellinie 20 der Pollücke 21 (q-Achse) anbelangt, ist diese ebenfalls nach der Erfindung definiert.

Die individuellen Winkelwerte in Bezug auf die q-Achse (Mittellinie 20) der einzelnen Orientieröffnungen 11 der Rotorteilpakete 13 errechnen sich, wie folgt (welche dem jeweiligen Winkel 22 in Fig.5 entsprechen):

Wenn die einzelnen Winkellagen ($W_i$) von $W_1$ bis $W_n$ entsprechend der Anzahl der Rotorteilpakete 13 (TP) des Rotors 3 (R) durchnummeriert werden, wobei (bei Fig.4: $W_1$, $W_2$, $W_3$, $W_4$, $W_5$ und $W_6$), dann ist die folgende Gleichung gültig:

$$W_i = \Delta W \times ((TP+1)/2 - i),$$

wobei i Werte von 1 bis "n" annehmen kann.

Bei den 6 Rotorteilpaketen ergeben sich nach Fig.4 die folgenden Winkelwerte bezogen auf die "q-Achse" 20:

$W_1 = \Delta W \times 2,5 = 1,11° \times 2,5 = 2,775°$;
$W_2 = \Delta W \times 1,5 = 1,11° \times 1,5 = 1,655°$;
$W_3 = 0,5 \times \Delta W = 0,5 \times 1,11° = 0,555°$;
$W_4 = \Delta W \times -0.5 = 1,11° \times -0.5 = -0,555°$;
$W_5 = \Delta W \times -1,5 = 1,11° \times -1,5 = -1,655°$;
$W_6 = \Delta W \times -2,5 = 1,11° \times -2,5 = -2,775°$

Wie aus den Obigen hervorgeht, sind die versetzten Rotorteilpaketen 13 bei der bevorzugten Anordnung also streng symmetrisch um die Mittellinie 20 (q-Achse) angeordnet. In Fig. 7-8 ist diese versetzte Anordnung der Rotorteilpakete 13 nach Fig. 4-5 schematisch dargestellt.

Wenn die Anzahl der Rotorteilpakete 13 gerade (wie bei Fig.4-8) ist, dann gibt es auf Grund der obigen Formel keine Öffnung 11 in der q-Achse (Zwischenpolebene, bzw. Mittellinie 20), bei ungerader Anzahl der Rotorteilpakete jedoch schon (und zwar diejenige des Segmentes mit der Nummer (RP+1)/2).

Wenn alle Rotorteilpakete 13 zum jeweils benachbarten linken Rotorteilpaket 13 um einen Winkel weitergedreht/versetzt sind, ergibt sich dadurch eine durchgängige Polschrägung, wobei die einzelnen Permanentmagnete $14_1$ - $14_6$ der Rotorteilpakete $13_1$ - $13_6$

stufenförmig angeordnet sind (siehe Fig.8). Es ist aber zu betonen, dass die erfindungsgemäß zueinander versetzt hergestellten Orientieröffnungen $11_1$ - $11_6$ der Rotorteilpakete $13_1$ - $13_6$ im zusammengebauten Zustand (siehe Fig.8) des kompletten Rotorblechpakets 4 koaxial bzw. fluchtend zur Aufnahme des gemeinsamen Orientierelementes 10 angeordnet sind (siehe Fig.8).

In Fig.6 ist eine vergrößerte Ansicht des Teils VI des obersten Blechs 9 des Rotorblechpakets 4 nach Fig.4 illustriert. Beim inneren (die nicht dargestellte Rotorwelle aufnehmenden) Durchmesser 17 des Blechs 9 ist eine nach innen ragende radiale Zunge 23 vorgesehen, die mit einer axialen Nut (nicht gezeigt) der Rotorwelle 5 im Sinne der Verdrehsicherung zusammenwirkt. In Fig.6 ist die radiale Zunge 23 beidseitig durch zwei z.B. trapezförmige Aussparungen 24 begrenzt. Dadurch kann eine bessere Anpassung des Rotorblechpakets 4 und eine sicherere Mitnahme (Verdrehsicherung) gegenüber der Rotorwelle 5 erreicht werden.

In Fig.9 ist eine bevorzugte Variante der Anordnung nach Fig.8 zu sehen, wobei aber die ungerade Anzahl der Rotorteilpakete $13_1$ - $13_5$ fünf ist. Dadurch wird erfindungsgemäß eine, auch in axialer Richtung symmetrische Anordnung der Permanentmagnete $14_{1-5}$ erreicht.

Dies wird einerseits wie oben beschrieben wurde (Fig.4-8), andererseits dadurch erreicht, dass hier das dritte Rotorteilpaket $13_3$ "zentral" d.h. direkt auf der Mittellinie/q-Achse 20 anordnet ist, und die zweiten und vierten Rotorteilpakete $13_2$ und $13_4$ um etwa 1-2 Grad nach hinten verdreht/winkelversetzt, während die ersten und fünften Rotorteilpakete $13_1$ und $13_5$ um etwa 1-2 Grad nach vorne verdreht/winkelversetzt sind.

Durch diese Anordnung der Rotorteilpakete $13_1$ - $13_5$ ist die Belastung des Rotors/Motors und dessen Lagerung vollständig gleichmäßig und auch in axialer Richtung symmetrisch. Dadurch kann die Lebensdauer der Lager und des ganzen Motors bedeutend verlängert werden.

Die wesentlicheren Vorteile des erfindungsgemäßen Rotorblechpakets 4 nach der Erfindung werden darin gesehen, dass einerseits bei einer HSM mit dem erfindungsgemäßen Rotor 3 und Rotorblechpaket 4 mit einerseits geringeren Rastmomenten, andererseits mit einem ruhigeren und leiseren Rotorlauf als beim Stand der Technik zu rechnen ist. Diese überraschenden Effekte sind insbesondere bei einer HSM für Elektromobilantrieb von großer Bedeutung.

Ein zusätzlicher Vorteil der Erfindung ist, dass durch die vorgeschlagene Anwendung der Orientierelemente 10 z.B. als Schrauben (ohne Schweißnaht-Fixierung) keine thermischen Spannungen im Rotorblechpaket 4 erzeugt werden.

Grundsätzlich sei hier noch angemerkt, dass in technischer Umkehr auch der Stator mit entsprechend versetzten Blechteilpaketen ausgeführt werden könnte und die Magnete tragen könnte, während der Rotor - über Schleifringe versorgt - mit der Statorwicklung ausgeführt sein könnte. Die Erfindung über das Konzept der technischen Umkehr ist so breit auszulegen, dass ein solcher Aufbau ebenfalls in den Schutzbereich fällt.

LISTE DER BEZUGSZEICHEN:

1 - Elektromaschine /Synchronmaschine (HSM)
2 - Stator
2.1 - Statornut
3 - Rotor
4 - Rotorblechpaket
5 - Rotorwelle
6 - Rotorpol
7 - Drehachse
8 - Rotationsachse des Blechs bzw. es Rotors
9 - Blech
10 - Orientierelement
11 - Runde Aussparung/Bohrung
12 - Polachse (d-Achse)
13 - Rotorteilpaket
14 - Permanentmagnet
15 - Aussparung für Magnet
16 - Äußerer Durchmesser
17 - Innerer Durchmesser
18 - Teilkreis der Orientieröffnungen
19 - Winkel
20 - Mittellinie der Pollücke (q-Achse)
21 - Pollücke
22 - Winkel
23 - Zunge
24 - Aussparung
$\Delta W$ - Winkelversatz zwischen den Rotorteilpaketen
$W_1$ - $W_n$ - Individuelle Winkelwerte der Rotorteilpakete in Bezug auf die q-Achse/Mittellinie 20

**Patentansprüche**

1. Rotor mit einem Rotorblechpaket (4) zur Rotation um eine Rotationsachse (8) für eine Elektromaschine, insbesondere Synchronmaschine (1), wobei das Rotorblechpaket (4) auf einer Rotorwelle (5) mitdrehbar befestigbar oder befestigt ist und aus einzelnen Blechen (9) besteht, und jede der Blechen (9) entlang eines Teilkreises (18) wenigstens zwei vorgefertigte Orientieröffnungen (11) - vorzugsweise Bohrungen - insbesondere zur Aufnahme von Blech-Orientierelementen (10) - beispielsweise Dorne oder Bolzen - aufweist, **dadurch gekennzeichnet, dass** das Rotorblechpaket (4) - wie an sich bekannt und insbesondere zur Verminderung von Rastmomenten der Elektromaschine (1)- aus mindestens zwei relativ zueinander verdrehten Rotorteilpaketen $(13_1\text{-}13_n)$ besteht, wobei jedes Rotorteilpaket (13) - wie ebenfalls an sich bekannt - mindestens zwei identischen Bleche (9) mit, im zusammengebauten Zustand des Rotorblechpakets (4) koaxial und bezüglich des Teilkreises (18) identisch angeordneten Orientieröffnungen $(11_1\text{-}11_n)$ entlang des Teilkreises (18) aufweist, wobei die Orientieröffnungen $(11_1\text{-}11_n)$ benachbarter Rotorteilpakete $(13_1\text{-}13_n)$ innerhalb eines zusammengebauten Rotorblechpakets (4) zwar koaxial fluchten, sie $(11_1\text{-}11_n)$ innerhalb des einen zusammengebauten Rotorteilpaketes $(13_1\text{-}13_n)$ jedoch in Bezug zu ihrer eigenen Relativposition - entlang des Teilkreises (18) gemessen - an versetzten Positionen im Vergleich zu jenen des benachbarten Rotorteilpaketes $(13_1\text{-}13_n)$ ausgebildet sind, so dass die Rotorteilpakete $(13_1\text{-}13_n)$ nach Orientierung an gemeinsamen Blech-Orientierelementen (10) in eine zueinander verdrehte Relativposition gebracht sind.

2. Der Rotor nach Anspruch 1, **dadurch gekennzeichnet, dass** die Orientieröffnungen $(11_1\text{-}11_6)$ an den Teilkreisen (18) der benachbarten Rotorteilpakete $(13_1\text{-}13_n)$ von einer Mittellinie (20) in Pollücken (21) um die Rotationsachse (8) des Rotorblechpakets (4) um einen Winkel (22) von vorzugsweise ca. -3,0° bis ca. +3,0° zueinander verdreht bzw. versetzt ausgebildet sind.

3. Der Rotor nach Anspruch 1 oder 2 mit vergrabenen Permanentmagneten in zum Umfang tangentialen Magnetfächern (15,15',15''), **dadurch gekennzeichnet, dass** im zusammengebauten Zustand des Rotorblechpakets (4) die Rotorteilpakete $(13_1\text{-}13_n)$ so relativ zueinander verdreht angeordnet sind und an den fluchtenden Orientieröffnungen $(11_1\text{-}11_n)$ zur Aufnahme eines der Orientierelemente (10) angeordnet sind, dass die Rotorteilpakete $(13_1\text{-}13_n)$ zusammen mit ihren vergrabenen Permanentmagneten (14,14',14'') entlang der Rotorachse (8) und symmetrisch zu einer Querebene (gegebenenfalls abweichend von einer Normalebene) in der Mitte der Rotorachse (8) eine symmetrische Gestalt im Rotorblechpaket (4) gebildet ist. (Fig.9)

4. Der Rotor nach einem der vorhergehenden Ansprüche, **dadurch gekennzeichnet, dass** die Magnetfächer (15,15',15'') und der Permanentmagnete (14,14',14'') in den benachbarten Rotorteilpaketen $(13_1\text{-}13_n)$ des Rotorblechpakets (4) treppenförmig angeordnet sind. (Fig.8 und 9)

5. Der Rotor nach Anspruch 3 oder 4, **dadurch gekennzeichnet, dass** im zusammengebauten Zustand des Rotorblechpakets (4) entlang von Orientierelementen (10) durch die versetzt ausgebildeten Orientieröffnungen $(11_1\text{-}11_n)$ der benachbarten Rotorteilpakete $(13_1\text{-}13_n)$ die tangentialen Magnetfächer (15,15',15'') der Rotorteilpakete $(13_1\text{-}13_5)$ mit ihren vergrabenen Permanentmagneten (14,14', 14'') auch in Bezug auf eine Ebene in axialer Richtung des Rotors (3) bzw. durch die Rotationsachse (8) wenigstens annähernd symmetrisch angeordnet sind. (Fig.7)

6. Rotor nach einem der vorhergehenden Ansprüche, **dadurch gekennzeichnet, dass** wenigstens ein Teil der Orientierelemente (10) als Spannbolzen für die Befestigung der Rotorteilpakete ($13_1$-$13_n$) zum Fixieren des Rotorblechpakets (4) dienen und dass das Rotorblechpaket (4) schweissnahtfrei ist.

7. Rotor nach einem der vorhergehenden Ansprüche, **dadurch gekennzeichnet, dass** wenigstens ein Teil der Orientieröffnungen ($11_1$-$11_n$) nach Zusammenbau des Rotorblechpakets (4) als Kühlungsöffnungen zur Aufnahme bzw. Durchleitung eines Kühlmediums für den Rotor dienen.

8. Rotor nach einem der vorhergehenden Ansprüche, **dadurch gekennzeichnet, dass** pro Rotorteilpaket ($13_1$-$13_n$) wenigstens 50 Rotorbleche (9) aufweist.

9. Rotor nach einem der vorhergehenden Ansprüche, **dadurch gekennzeichnet, dass** jeder Rotor wenigstens 5 - vorzugsweise jedoch eine gerade Anzahl Rotorteilpakete ($13_1$-$13_6$) umfasst.

10. Rotor nach einem der vorhergehenden Ansprüche, **dadurch gekennzeichnet, dass** als Orientierungselemente hochfeste, nichtmagnetische Materialien - vorzugsweise Karbon oder faserverstärkte Kunststoffe - vorgesehen sind.

11. Rotor nach einem der vorhergehenden Ansprüche, **dadurch gekennzeichnet, dass** die Rotorbleche radial unterhalb der Magnetfächer (15,15',15") Ausnehmungen (z.B. elliptische Aussparung in Fig.2) zur Erhöhung des magnetischen Widerstands aufweisen, die zusammen mit den Orientieröffnungen ($11_1$-$11_n$) den Magnetfluss beeinflussen.

12. Rotor nach einem der vorhergehenden Ansprüche, **dadurch gekennzeichnet, dass** die Bleche aus Kobalt oder einer Kobaltlegierung aufgebaut sind.

Fig.1

Fig.2

Fig.3

Fig.5

Fig.6

Fig.4

Fig.7

Fig.8

Fig.9

Europäisches
Patentamt

European
Patent Office

Office européen
des brevets

**EUROPÄISCHER RECHERCHENBERICHT**

Nummer der Anmeldung

EP 10 18 9891

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br>Y<br>A | US 2010/026128 A1 (IONEL DAN M [US]) 4. Februar 2010 (2010-02-04) * Seite 3, Absatz 43 - Seite 4, Absatz 54; Abbildungen 1,2,3a,3b, * ----- | 1-3,5,8, 9<br>1,12<br>6,7 | INV.<br>H02K1/27<br>H02K16/02 |
| X | DE 10 2008 020779 A1 (SIEMENS AG [DE]) 5. November 2009 (2009-11-05) * das ganze Dokument * ----- | 1-3,5,6, 8,9 | ADD.<br>H02K29/03 |
| Y | US 2003/020351 A1 (LEE KYUNG HUN [KR] ET AL) 30. Januar 2003 (2003-01-30) * Seite 3, Absatz 56 - Seite 5, Absatz 89; Abbildungen 3-11 * ----- | 1-10 | |
| Y | DE 10 2008 020778 A1 (SIEMENS AG [DE]) 5. November 2009 (2009-11-05) * Seite 5, Absatz 38 - Seite 7, Absatz 46; Abbildungen 1,2,3,4 * ----- | 1-10 | |
| X<br>A | EP 1 850 457 A2 (SUNTECH GENERATOR CO LTD [KR]) 31. Oktober 2007 (2007-10-31) * Spalte 5, Absatz 45 - Spalte 6, Absatz 49 * * Spalte 8, Absatz 64 - Spalte 9, Absatz 67; Abbildungen 4-6 * ----- | 1,3,5-7, 11<br>4,8,9 | RECHERCHIERTE SACHGEBIETE (IPC)<br><br>H02K |
| Y | GB 2 451 219 A (VACUUMSCHMELZE GMBH & CO KG [DE]) 28. Januar 2009 (2009-01-28) * das ganze Dokument * ----- | 1,12 | |

Der vorliegende Recherchenbericht wurde für alle Patentansprüche erstellt

| Recherchenort | Abschlußdatum der Recherche | Prüfer |
|---|---|---|
| München | 30. März 2011 | von Rauch, Marianne |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 18 9891

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2011

| Im Recherchenbericht angeführtes Patentdokument | Datum der Veröffentlichung | Mitglied(er) der Patentfamilie | Datum der Veröffentlichung |
|---|---|---|---|
| US 2010026128 A1 | 04-02-2010 | CA 2732646 A1<br>WO 2010014844 A2 | 04-02-2010<br>04-02-2010 |
| DE 102008020779 A1 | 05-11-2009 | KEINE | |
| US 2003020351 A1 | 30-01-2003 | CN 1400725 A<br>DE 10207267 A1<br>GB 2378323 A<br>JP 3566703 B2<br>JP 2003052156 A | 05-03-2003<br>20-02-2003<br>05-02-2003<br>15-09-2004<br>21-02-2003 |
| DE 102008020778 A1 | 05-11-2009 | KEINE | |
| EP 1850457 A2 | 31-10-2007 | JP 2007300786 A<br>US 2007252470 A1 | 15-11-2007<br>01-11-2007 |
| GB 2451219 A | 28-01-2009 | DE 102007035774 A1<br>HK 1127158 A1<br>KR 20090012145 A | 29-01-2009<br>24-12-2009<br>02-02-2009 |

EPO FORM P0461

Für nähere Einzelheiten zu diesem Anhang : siehe Amtsblatt des Europäischen Patentamts, Nr.12/82

**EP 2 451 049 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0169759 A2